# EUROPEAN PATENT APPLICATION

(11) **EP 1 434 343 A2**
(43) Date of publication of application: **30.06.2004**
(21) Application number: 03258200.9
(22) Date of filing: 23.12.2003
(51) Int. Cl.: H02P 3/18

(54) **Apparatus and method for monitoring a motor**

(30) Priority: 27.12.2002 GB 0230210
(71) Applicant: CASTELL SAFETY INTERNATIONAL LIMITED, London NW9 9PQ (GB)
(72) Inventor: Ingleby-Oddy, David, Truro TR1 3HZ Cornwall (GB)
(74) Representative: Granleese, Rhian Jane

(57) **Abstract**

An apparatus for determining the status of a motor (301), the apparatus comprising:
microprocessor means (307) for determining when the motor (301) has stopped;
indicating means (311) for indicating information about the motor under the
control of the microprocessor means (307); and
a two-way digital data communication interface (313, 319) provided to said microprocessor means (307) to allow data to be obtained from and communicated to said microprocessor means (307).

## Description

The present invention relates to the field of apparatus for monitoring a motor. More specifically, the present invention relates to an apparatus which has microprocessor means which determine when a motor has stopped and which is capable to two-way communication.

Motors are used for many applications in both light and heavy industry. For example, in mixers, pellet presses, crumblers and hammer mills. Due to the high rotation speeds which may be attained by the motor, it is important to ensure that the motor has stopped before the motor is accessed in order to prevent injury.

When the power supply to a motor is switched off or disconnected, the motor will not stop immediately and thus there is a need for an apparatus which can monitor the motor to establish when it has properly stopped.

EP 0 665 405 discloses a motion sensor which is used to determine when a motor has stopped. In one embodiment, the sensor uses the fact that the motor becomes a current generator once the power has been switched off. This current is measured to determine if the motor has stopped rotating.

EP 0 791 831 discloses a motion sensor which uses the varying impedance of the motor winding during rotation in order to determine when the motor has stopped. The sensor operates by additionally providing an extra high frequency signal in addition to the motor signal.

EP 0 394 955 and EP 0 332 127 both disclose back EMF sensors. When the power to the motor is switched off or disconnected, the rotation of the motor within the magnetic field causes an EMF, a so called back EMF (BEMF). By monitoring this back EMF, the motor stoppage may be determined.

In EP 0 394 955 and EP 0 394 955, the Back EMF is analysed using a microcomputer. The microcomputer outputs signals to thyristor controls which in turn energise windings of the motor in order to slow the motor. However, this control system is essentially a closed feedback loop where measurement of the motor speed is used to control the signal applied to a motor in order to slow the motor more quickly.

Conventional monitoring devices, such as those described above are effective in monitoring motor stoppage. However, they are all essentially closed systems which indicate locally that the motor has stopped. Some of them operate a safety interlock, but decision as to when to open this interlock is usually made entirely on the basis of whether or not the motor has stopped and does not take into account any other factors.

Ensuring safety of large establishments has always been important. It is important to be able to both monitor and control the safety of personnel running large machines both locally and centrally.

The present invention addresses the above problems and in a first aspect provides: an apparatus for determining the status of a motor, the apparatus comprising:
microprocessor means for determining when the motor has stopped;
indicating means for indicating information about the motor under the control of the microprocessor means; and
a two-way digital data communication interface provided to said microprocessor means to allow data to be obtained from and communicated to said microprocessor means.

By providing a two way digital data communication interface, the apparatus may be monitored and fully or partially controlled by a remote operator in addition to the apparatus being monitored locally. The apparatus may send and receive instructions to further digital components and may be networked with other devices.

The apparatus preferably comprises memory means configured to store status information about the motor or the monitoring means. The status information may include error information. These memory means may be located within the microprocessor and preferably operate under the control of the microprocessor means.

The apparatus may also comprise interrogation means which allow a remote or a locat device to obtain information, upon request, about the current or historical status of the motor. These operate over the two-way digital data communication interface.

The local or remote device may be a Programmable logic controller (PLC), Supervisory Control and Data Acquisition System (SCADA), microcomputer or the like.

The data received from the apparatus may, for example, allow the remote or local device to either store data, analyse data, present data in a readable format to an operator or even perform a function.

Preferably, the microprocessor means are configured to receive instructions over said communication means. For example, the microprocessor means may be configured such that information received from a local or remote device via said communication interface affects the indicator means.

The communication interface may be a half duplex interface or a full duplex interface. The half duplex interface may be a RS485 (multi-drop) asynchronous serial interface which is capable of communicating over a single twisted pair cable over distances of up to 1km. The full duplex interface may be a TTL (logic) level asynchronous serial interface.

The communication interface is preferably interfaced to a safety bus and more preferably to a safety bus which operates in accordance with CAT 4 guidelines.

The communications interface may be also be configured to communicate with a keypad or keyboard or even a further communicator such as a bluetooth communicator. If the communicator is a bluetooth communicator it can be configured to communicate with a received such as a mobile phone. Thus a supervisor can receive information concerning the apparatus even when he is walking around the plant.

The apparatus preferably monitors the motor using the back EMF generated by the motor. Thus, preferably, the apparatus comprises means to measure the back EMF of the motor and to provide a signal indicative of the back EMF to the microprocessor means.

In a particularly preferred configuration, the apparatus further comprises:
first input means for receiving a first signal indicative of the back EMF from a first winding of the motor; and
second input means for receiving a second signal indicative of the back EMF from a second winding of the motor,
the microprocessing means comprising:
   first logic means for determining when said first signal satisfies a first logic condition; and
   second logic means for determining when said second signal satisfies a second logic condition; the
   microprocessor means determining that the motor has stopped when the first and second conditions are satisfied within a predetermined time interval.

By using first and second logic means, to separately evaluate separate inputs from the motor, extra safety is provided since an erroneous reading from one channel will not cause the apparatus to think that the motor has stopped. Further, since the microprocessor means will only determine that the motor has stopped when both logic means are satisfied within a predetermined time interval, the chances of an erroneous reading causing the apparatus to deduce that the motor has stopped is further reduced.

The first logic means preferably comprises a first comparator for comparing the first signal with a threshold. More preferably the first comparator compares the first signal with an upper and lower threshold. The second logic means also preferably comprises a second comparator for comparing the second signal with a threshold. More preferably, the second comparator compares the second signal with an upper and lower threshold.

In a particularly preferred embodiment, the apparatus controls access to a motor by releasing a key. The key is provided in a holder. When the motor is running, the key may not be removed from the holder. When the apparatus determines that the motor has stopped, the key may be released to indicate that the motor has stopped. The key may then be removed from the holder and used to open the motor enclosure.

Using the two way communication interface in combination with a releasable key means that if the microprocessor means determines that the key should be released a remote supervisor could overrule this command. For example, if the supervisor is aware that no one with the correct authority is present to open the enclosure, release of the key may be blocked.

In order to measure the back EMF, the apparatus further comprising means to sense the back EMF of the first and second motor windings. More preferably, the first and second motor windings are measured with respect to a third input from a third motor winding.

In a particularly preferred configuration, a predetermined voltage is applied to the third input, such that the third input forms a virtual ground. The use of a vitual ground has two strong advantages. It can be used to bias the detected potentials for optimum amplification prior to the analysis of the signal. Also, biasing the input signals with respect to the ground can be used to indicate if a wire has become detached, because if a wire has become detached, the signal will not be biased with respect to the true earth.

The first and second input means are preferably isolated from one another.

The motor being monitored may be any type of motor such as a 3 phase motor, an AC single phase motor or a DC motor. The 3 phase motor may, for example, have Star Delta starting, a variable speed drive or be of the "Direct on Line" type.

In a second aspect, the present invention provides a method of determining the status of a motor, comprising:
providing microprocessor means for determining when the motor has stopped;
providing indicating means for indicating information about the motor under the control of the microprocessor means; and
providing a two-way digital data communication interface provided to said microprocessor means to allow data to be obtained from and communicated to said microprocessor means.

The present invention will now be described with reference to the following preferred non-limiting embodiments in which:
Figure 1 is an overview of an apparatus in accordance with an embodiment of the present invention;
Figure 2 is a schematic block diagram of a motor stoppage detector in accordance with an embodiment of the present invention;
Figure 3A is a schematic of the input protection circuit of the device of Figure 2;
Figure 3B is a plot illustrating the effect of the input protection circuit of 3A;
Figure 4 schematically illustrates the preamplification control in the device of Figure 2;
Figure 5 schematically illustrates the microcontroller located in channel 1 of the device of Figure 2;
Figure 6 schematically illustrates a plot showing how the signal inputted on channel 1 is compared in the microcontroller;
Figure 7 is a schematic of the microcontroller of channel 2 of the device of figure 2;
Figure 8 is a schematic of the serial interface of the device of figure 2; and
Figure 9 illustrates a BEMF expansion interface and the device of Figure 2.

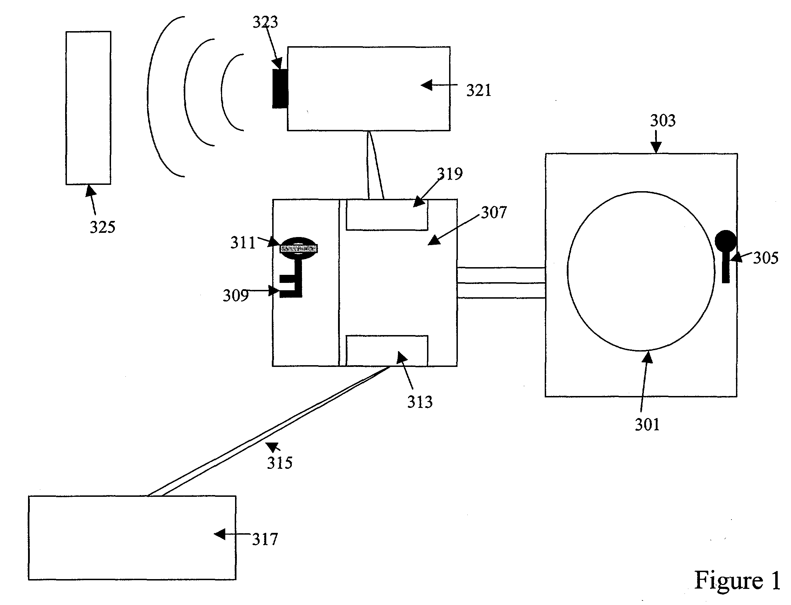

Figure 1 is an overview of an apparatus in accordance with an embodiment of the present invention.

Motor 301 operates inside motor enclosure 303. Motor enclosure 303 is a locked enclosure and may be opened by inserting the appropriate key into keyhole 305.

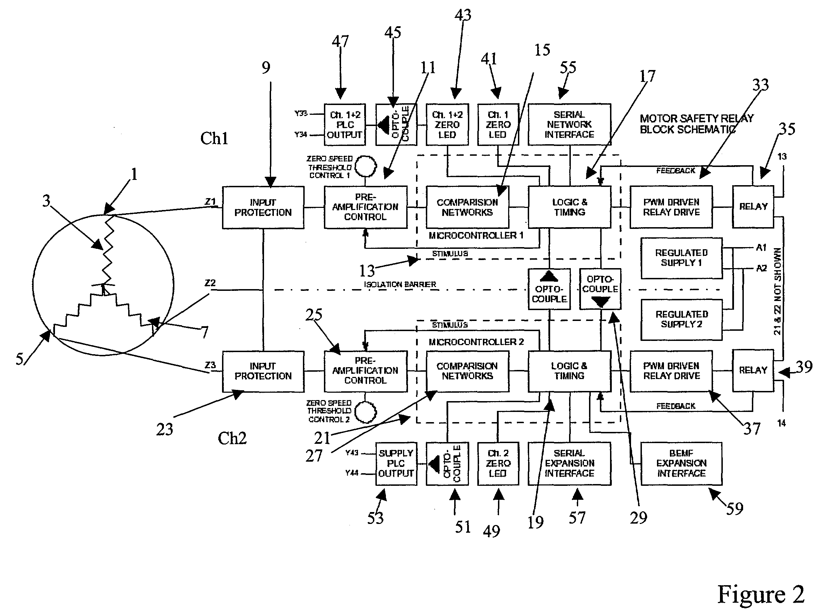

The status of motor 301 is monitored by unit 307 which will be described in more detail with reference to Figures 2 to 8. Unit 307 uses microprocessor based sensors in order to determine if the motor has stopped. The microprocessors are connected to relays which operate a solenoid (not shown) to release key 309 from key holder 311, provided on unit 307, when the motor has stopped.

Key 309 may then be removed from key holder 311 and inserted in keyhole 305 in order to open motor enclosure 303. Unit 307 may be operated under the control of a local supervisor.

Unit 307 is provided with a serial network interface 313 which, in this example, is an optically isolated half duplex RS485 (multi drop) asynchronous serial interface which communicates with other devices such as PLCs, SCADA systems and microcomputers on an RS485 bus over a single twisted pair cable at distances of up to one kilometre. Although in this particular embodiment an RS485 bus in used, there are a number of field bus type systems on the market which may be used to communicate with the serial network interface. The interface 313 may be made compatible with any of these field buses by programming the unit using freely available software.

In this particular example, serial network interface 313 is connected via twisted pairs 315 to remote supervisor control 317. Stored data from unit 307 can be transmitted to remote unit 317 and data may be transmitted by remote unit 307 back to local unit 307 in order for the local unit 307 to perform certain functions.

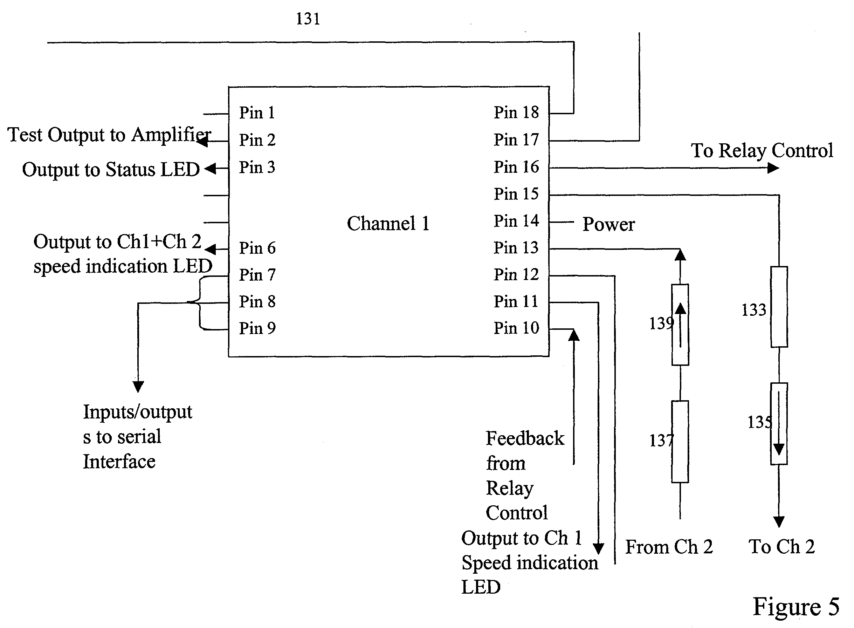

Local unit 307 may store the following data:
1. Average rundown times of the motor which is being monitored;
2. Status of the motor (i.e. whether it is on, running down or at a standstill);
3. Frequency of maintenance (i.e. how many times a motor has been switched off);
4. Error or failure conditions as will be described later in relation to Figure 5 of the description; and
5. Status of any peripherals e.g. LCD displays etc.

In response, the remote unit 317 can transmit data back to the local unit 307 such as:
1. Functional routines to prevent maintenance on the motor 301;
2. Information indicating that the machine has been stopped for cleaning;
3. Instructions to control the release of key 309 from key holder 311. Therefore, it can block the release of the key if it is decided that the local operator should not open the system or, for example, if the remote supervisor believes that there is nobody there with sufficient training to open the motor enclosure 303.

The above system has the advantages that a remote operator can control the safety of the machine. As there may be many motors in a single plant with local units 307, a remote supervisor can centrally monitor all of the local units 307 and hence monitor and control the safety of the whole plant.

Also, the local units 307 which monitor the machines can be brought into an existing PLC control system. Thus, by use of the serial network interface 313, the maintenance access and the safety of the machine becomes part of the whole motor control system.

In addition to serial network interface 313 the unit 307 is also provided with serial expansion interface 319. Serial expansion interface 319 is a full duplex (bi-directional) TTL (logic) level asynchronous serial interface that can be utilised for bi-directional communication with offboard peripherals such as an LCD/keypad panel or other communication interfaces such as a CAN bus.

Examples of offboard peripherals which may be contacted by the serial expansion interface are as follows:
1. Safety bus modules providing CAT 4 communication with other compatible safety bus systems. The CAT 4 status ensures that all communication is correct and will not pose an unsafe condition if any type of failure occurs;
2. LCD/keypad panels. A local operator interface will provide access to any information in the local unit 307. This will be described in more detail with reference to Figure 5;
3. Bluetooth enabled communicator or receiver.

In the embodiment of Figure 1, the serial expansion interface 319 communicates with keypad 321 which may be operated by a local user or supervisor. Keypad 321 may be provided with a display which allows the local user to interrogate local unit 307.

Keypad 321 also has bluetooth communicator 323. Bluetooth communicator 323 allows communication to be made to a remote mobile 325. Therefore, if the motor 301 stops, a communication may be sent from serial expansion interface 319 over the CAN bus to a bluetooth communicator 323. Bluetooth communicator 323 then relays this message to mobile 325. Therefore, a supervisor (either local or remote) can receive instant updates concerning the status of motor 301 even when the supervisor is wandering around the plant. Therefore, if the supervisor is in a meeting and there is some problem with the machine, the supervisor can be immediately informed of the problem.

Figure 2 schematically illustrates some of the main components of local unit 307 connected to a motor 1 which has three windings 3, 5 and 7. Input Z1 is a measurement of the potential drop across first winding 3 with respect to the potential dropped across second winding Z2. Input Z3 measures the potential across third winding 5 again with respect to the second winding 7 Z2. Thus both signals Z1 and Z3 are measured with respect to a common reference on the motor, i.e. Z2.

Input Z1 is processed using optically isolated channel 1 (Ch. 1). Input Z3 is processed using optically isolated channel 2 (Ch 2).

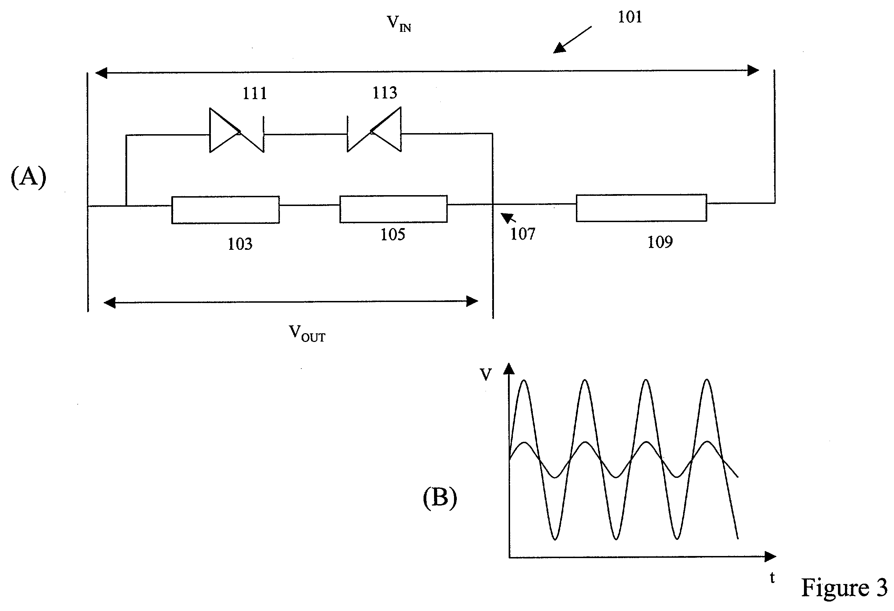

First discussing channel 1, signal Z1 (which is measured with respect to Z2) is first processed by input protection section 9. Input protection section 9 will be described in more detail with reference to Figure 3. Input protection section 9 serves to clamp voltages so that they do not get too large for the preamplification control section 11.

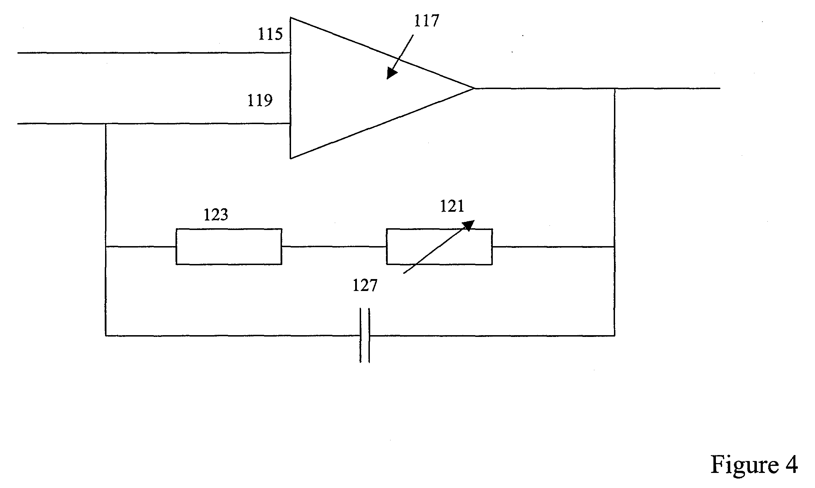

The preamplification control section will be described in more detail with reference to Figure 4. Its primary function is to ensure that the signal derived from Z1 after it has been passed through input protection is of a sufficient size to be processed by microcontroller 13.

Microcontroller 13 comprises two main sections, comparison networks 15 and logical and timing section 17. The microcontroller for channel 1 will be described in more detail with reference to Figure 5. The comparison networks serve to compare the modified Z1 signal with a threshold. In this particular embodiment, Z1 is compared with both an upper and lower threshold. The logic and timing section 17 is in communication with the logic and timing section 19 of the microcontroller 21 of channel 2.

Channel 2 processes input Z3, in the same manner as channel 1, the signal from Z3 is first passed through input protection section 23 which functions in the same manner as input protection section 9 of channel 1. The signal is then passed through preamplification control section 25 which operates in the same manner as preamplification control section 11 of channel 1. The amplified signal is then directed into microcontroller 21 of channel 2. Microcontroller 21 comprises comparison networks 27 and logic and timing section 19 in the same manner as microcontroller 13.

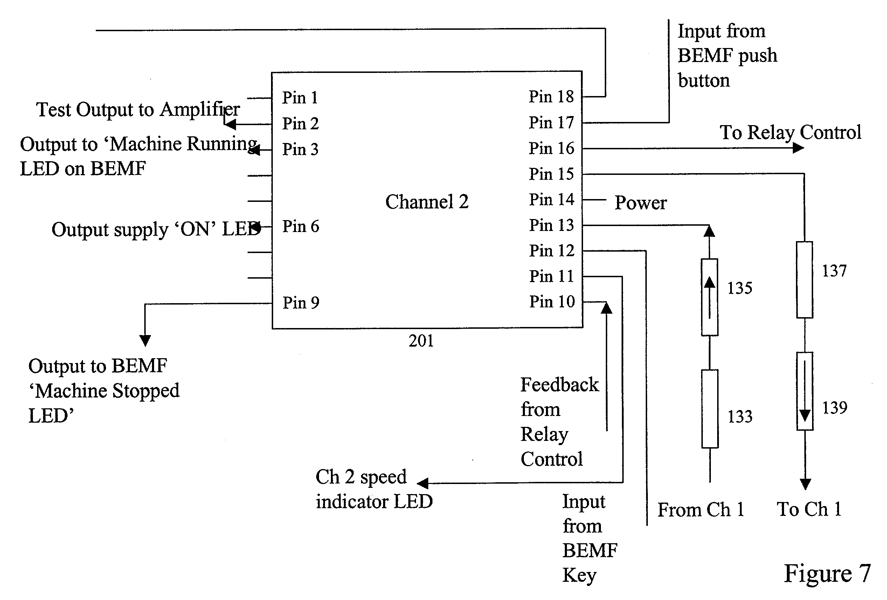

Microcontroller 13 of channel 1 and microcontroller 21 of channel 2 are largely identical in their functions. However, there are some slight differences which will be described with reference to Figures 5 and 7. The logic and timing sections 17 and 19 of the microcontrollers of channels 1 and 2 respectively are optically isolated from one another and communicate via first opto-coupler 29 which carries information from the logic and timing section 17 of channel 1 microcontroller 13 to the logic and timing section 19 of channel 2 microcontroller 21 and second opto-coupler 31 which allows data to flow from logic and timing section 19 of channel 2 to logic and timing section 17 of channel 1.

The exact operation of microcontrollers 13 and 21 will be described with reference to figures 5 to 7. In summary, channel 1 microprocessor 13 and channel 2 microprocessor 21 are configured to work together and indicate that the motor has stopped when:
the signal on channel 1 lies between upper and lower thresholds and within two seconds the signal on channel 2 lies between the two thresholds. Further, there is a delay of two to four seconds after this condition has been met before the device indicates that the motor has stopped.

Depending on the status of the motor sensed by microcontrollers 13 and 21, the microcontrollers 13, 21 output a number of instructions. These will be described in more detail with reference to figures 5 to 7.

Microcontroller 13 is connected via its logic and timing section 17 to PWM driven relay drive section 33. This is in turn connected to relay 35. Relay 35 feeds back a signal to microcontroller 13. Similarly, on channel 2, microcontroller 21 is connected via its logic and timing section 19 to channel 2 PWM driven relay drive 37. This is again connected to channel 2 relay 39. Channel 2 relay 39 supplies a feedback signal to channel 2 microcontroller 21.

If the above condition is satisfied, the PWM driven relay drives 33 and 37 activate relays 35 and 39. The relays are either configured to open a close contact or close open contacts. The relays will be described in more detail in relation to Figures 5 and 7. However, for completion, it should be mentioned here, that the relays are of a type which can monitor their own condition. Each relay 35 and 39 is of a type which can monitor itself. Therefore, each relay 35 and 39 can feed back to microcontrollers 13 and 21 respectively their current state. This allows for errors to be detected if the microcontroller realises that the current state of the relay is different to what was determined by the microcontroller.

In addition to activating relays 35 and 39 via relay drivers 33 and 37, microcontrollers 13 and 21 also activate other indicators.

Microcontroller 13 is connected to LED 41 which is lit when microcontroller 13 determines that Z1 satisfies its threshold conditions. LED 43 is lit by microcontroller 1 once both channel 1 and channel 2 have satisfied their logic conditions, i.e. fall within preset thresholds within a certain time.

Channel 2 is not initially evaluated by microcontroller 13. However, microcontroller 13 communicates with microcontroller 21 via opto-couplers 31 and 29. In addition to lighting LED 43, microcontroller 13 communicates via opto-coupler 45 with PLC output 47. PLC output 47 is a transistor switch which supplies a signal when the microcontroller 13 has determined that the motor has stopped and when power is supplied to the output. It can be used to activate a PLC output module.

The channel 2 microcontroller 21 in addition to activating relay 39 via relay drive 37 lights LED 49 when Z3 falls between the two thresholds of comparison network 27. Further, microcontroller 21 also energises opto-coupler 51 which in turn energises supply PLC output 53 which functions in a similar way to PLC output 47.

Microcontroller 13 also interfaces with serial network interface 55 and channel 2 microcontroller 21 interfaces with serial expansion interface 57. These interfaces have been described in relation to figure 1 and will be explained in more detail with reference to figures 5, 7 and 8.

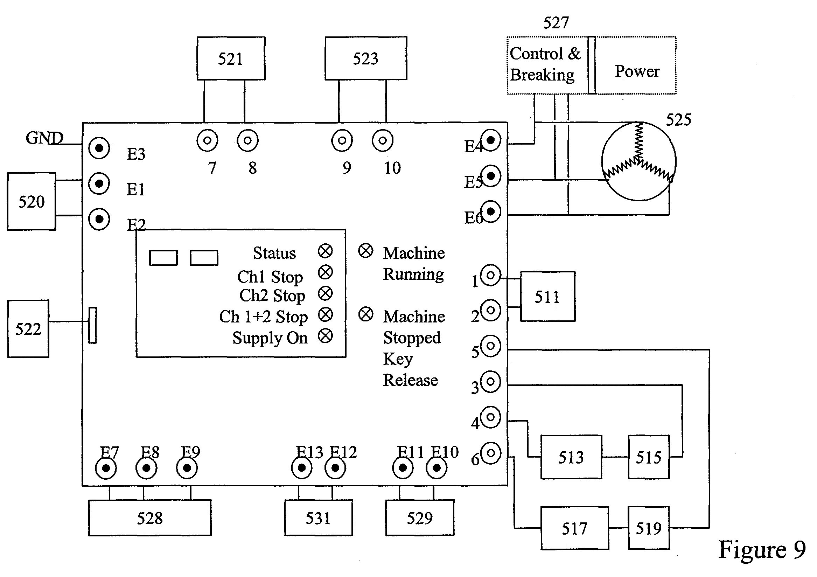

Finally, microcontroller 21 is also connected to BEMF expansion interface 59 which will be described in more detail with reference to Figure 9.

The input protection sections 9 and 23 of channels 1 and 2 respectively of Figure 2 are shown in more detail in Figure 3A. The input voltage V_{IN} which is taken from Z1 with respect to Z2 is applied across potential divider 101 which comprises resistors 103 and 105 on one side of potential divider junction 107 and a third resistor 109 on the opposing side of potential junction 107. This arrangement provides an input resistance of approximately 2MOhms.

Typically, the junction 107 of the potential divider 101 would be approximately at half the applied input voltage. Therefore, if the motor is a single phase motor running at 240V AC, the junction will be at 120V AC. However, zener diodes 111 and 113 are provided to clamp the signal so that Vₒᵤₜ does not exceed 2.5V AC. Zener diodes 111 and 113 are connected in an anode-to-anode configuration which prevents the AC voltage applied to them from rising above the standard forward voltage plus the reverse voltage (approximately 2.5 V to 2.8V). The effect of the input protection section is shown in Figure 3A. Here, the Y-axis indicates voltage and X-axis indicates time. The larger signal corresponds to either the EMF applied between Z1 and Z2 or Z3 and Z2 (i.e. V_{IN}). The smaller signal corresponds to Vₒᵤₜ.

The input protection section is required because when the motor is running, the voltage applied to input Z1, Z2 and Z3 equals the voltage applied to the motor to operate the motor in normal manner e.g. 240V AC for a single phase AC motor or 450V AC for a three phase AC motor. This normal motor operating voltage is extremely large in comparison with the small back-EMF voltage (5-150mV AC) to be measured. Thus, there is a need to provide this input circuitry on each channel to be capable of blocking the operating voltage but transparent to the back-EMF voltage.

Figure 4 illustrates the basic circuitry of the preamplification control 11 of channel 1 or the preamplification control 25 of channel 2. The output from the centre of potential divider 107 (figure 3A) which is taken with respect to V2 is provided to the high impedance non-inverting input 115. Amplifier 117 is configured as a non-inverting amplifier. To allow AC signals which have both positive and negative components to be correctly amplified by this amplifier which is powered by a 5V DC supply (power supply not shown), a 2.5V DC (virtual ground) signal is applied to motor winding input Z2 and through a resistor to the non-inverting input 119, to ensure that any AC signal which is applied to Z1 will be correctly biased at half the amplifier's supply voltage.

Variable resistor 121 and fixed resistor 123 are used to set the gain of amplifier 117. In this particular embodiment, it is necessary to be able to detect back-EMF signals of between 5 and 100mV AC. Thus, it is necessary to be able to allow the amplifier gain to be varied between 1:6 and 1:100. For example, if a signal with amplitude of 25mV AC is applied between terminals Z1 and Z2 then the signal level at the non-inverting input 115 of amplifier 117 will be approximately 12.5mV AC (after being passed through voltage divider 101). If the gain is to 1:10, the signal outputted at output 125 of amplifier 117 is 125mV AC with respect to Z2 or 125mV AC + 2.5V DC offset with respect to the amplifier supply ground (0V).

The signal outputted from amplifier 117 will be compared with two thresholds in microcontroller 13. The threshold levels within the comparator are fixed. Thus, the variable gain of amplifier 117 allows the size of the signal which is compared with the fixed threshold to be varied and hence provides a way of 'tuning' the logic conditions which are used to determine if the motor has stopped.

Capacitor 127 is provided to improve amplifier stability by providing low pass filtering of the amplified signal and prevents amplifier oscillation.

The output 125 from amplifier 117 is then fed into pin 18 of channel 1 microcontroller 131. Channel microcontroller 131 is a flash-type microcontroller and is this particular example is microchip PIC16F628.

The software which controls microcontroller 131 consists of multiple processing routines which are called from a central loop which is repeated continually during power application and multiple processing routines which are called every 1mS with an interrupt generated by an internal timer feed from the microcontroller's 4MHz clock. Examples of such routines are a comparator count processing routine, which determines the status of the motor, a power-up routine which runs some preliminary tests on power-up and a relay status determination routine which assesses and monitors the relays.

A complete process sample takes 1 second and a comparator within microcontroller 131 is sampled every 1mS within this period. Therefore, there are a thousand sub-samples per second with this sampling process being repeated on a constant basis when the microcontroller 131 is switched on.

The signal applied to pin 18 is an AC signal, in other words, it has both positive and negative components about the "virtual ground" point (2.5V DC). Thus, in order to evaluate the signal properly, it is necessary to evaluate both the positive and the negative components of the signal with respect to the virtual ground. To allow the comparator to count positive and negative signal transitions (i.e. both above and below 2.5V DC), it is necessary to change the comparator threshold from a value that is above 2.5V V (i.e. 2.5V DC + 62mV) to a value which is below the virtual ground (i.e. 2.5V DC - 62mV). Thus, the threshold changes control by the program and is flipped from positive (2.5V DC + 62mV) to negative (2.5VDC - 62mV) every 250mS and provides a total of 500mS in each threshold per 1 second sample i.e. two periods of 250mS sections of comparing the threshold with 2.5V DC + 62mV and two periods of 250mS of comparing the signal with 2.5V DC - 62mV.

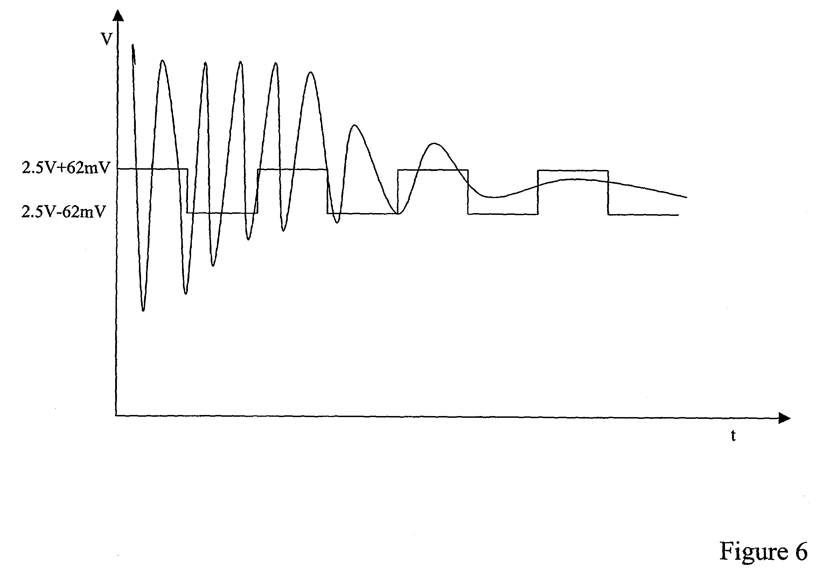

This is schematically illustrated in Figure 6. Time is provided on the X-axis and voltage on Y-axis. The step like signal is the comparative threshold switching between V₁ = 2.5V DC + 62mV DC and V₂ which equals 2.5V DC - 62mV. The oscillating trace is the signal received on pin 18 which over time decreases in period and amplitude such that it falls within V₁ and V₂.

A comparator count processing routine runs in microcontroller 131. This processing routine checks every 1 millisecond the status of the comparator output in comparison with the current threshold and increments from zero either the internal positive threshold count (POSITIVE_EXCEEDED_COUNT) whenever the positive threshold has been exceeded and the internal negative threshold count whenever the negative threshold has been exceeded (NEGATIVE_EXCEEDED_COUNT).

The variables POSITIVE_EXCEEDED_COUNT and NEGATIVE_EXCEEDED_ COUNT are 16-bit variables and provide counted values between 0 and 500 for both positive and negative incursions. These reflect the amount of time one signal was detected above or below the set threshold.

Once these values have been determined, they are used to determine the current state of motor rotation.

Microprocessor 131 can be used to determine three motor states:
1. Motor disconnection;
2. Motor at zero speed (standstill); and
3. Motor running.

In the comparator count processing routine, the POSITIVE_EXCEEDED_COUNT is compared with a negative winding disconnection value constant. If the POSITIVE_EXCEEDED_COUNT is within the range of motor disconnection constant, the input via pin 18 is deemed to be in error.

The motor disconnection count values are only obtained if the low impedent motor winding has been disconnected between Z1 and Z2. This disconnection prevents the Z1 input from being biased with respect to the virtual ground at Z2 and also allows a resistor (not shown) to bias up the amplifier 117 of Figure 4 past the negative threshold point giving a very large NEGATIVE_EXCEEDED_COUNT and below the threshold point giving a very low POSITIVE_EXCEEDED_COUNT for the duration of the complete one second sample.

Microcontroller 131 determines that the motor has stopped if the NEGATIVE_EXCEEDED_COUNT and the POSITIVE_EXCEEDED_COUNT values are within range, more samples are made to ensure that the motor has stopped before the microcontroller outputs a signal indicating that the motor has stopped.

The microcontroller 131 then checks the channel 2 microcontroller to see if the channel 2 readings also suggest that the motor has stopped. This will be described in more detail shortly.

Finally, if the controller determines that the count values either do not indicate that the motor has been disconnected or that the motor has stopped, the controller 131 deduces that the motor is still running and sends a signal to cancel any indicators which indicate that the motor may have stopped running.

Previously, it has been mentioned, that the channel 1 microcontroller 131 communicates with the channel 2 microcontroller which is shown in detail in Figure 7. Both channel 1 and channel 2 are capable of full duplex (both ways at the same time) asynchronous serial communication with each other so that status information may be transferred.
The transferred status byte may convey current channel status, error codes or requests that allow the opposing channel to make decisions regarding channel disablement, in the case of an error code, or for example, the status and the case of channel-to-channel timeout.

Communication takes place over an optically isolated Inter Channel Bus (ICB) with a transmission of status from channel 1 microcontroller 131 being outputted over pin 15 through a resistor 133 and through opto-coupler 135 towards pin 13 of microcontroller 201 of channel 2 (Figure 7).

Signals from microcontroller 201 of channel 2 reach pin 13 of microcontroller 131 of channel 1 via resistor 137 and opto-coupler 139. The asynchronous transmission protocol was developed to ensure that each bit of the 8-bit of status information is transferred correctly even if the operating frequency of the microcontroller deviates outside tolerance limits.

In most asynchronous communication protocols, 8 bits of information are transferred using one starter bit and one stop bit to delimit each transfer. This protocol relies on the receiving and transmitting devices having clock frequencies within a defined tolerance of each other to prevent data error. To overcome this problem, the protocol used here delimits each bit of information with a start and a stop bit allowing the receiving channel to re-time itself eight times for each byte (i.e. 8 bits) of status information transferred.

A complete byte transfer consists of the following:
1. A low attention bit of duration 5mS;
2. A high start bit for data bit 1 of duration 4mS;
3. A data bit 1 (high or low) or duration 4mS;
4. A low stop bit for data bit 1 of duration 4mS;
5. New bits 2 to 7 with associated start and stop bits;
6. A high start bit for data bit of duration 4mS;
7. A data bit 8 (high or low) of duration 4mS; and
8. A low stop bit for data bit 8 of duration 4mS.

The following information is sent between the two controllers:

| Code byte (hex) | Code description | Code type |
|---|---|---|
| 00 | Motor Disconnection | Error |
| 01 | Relay Activation Failed | Error |
| 02 | Relay Contact Weld | Error |
| 03 | Pre-Amplification Stimulation Failed | Error |
| 04 | Process Evaluation | Error |
| 05 | Other Channel Not Responding | Error |
| 10 | Channel OK | Status |
| 11 | Motor at Zero Speed | Status |
| 12 | Relay activated | Status |
| 13 | Relay deactivated | Status |
| 14 | Motor Running | Status |
| 15 | Channel timed out | Status |
| 16 | Channel undergoing tests | Status |
| 17 | Channel disabled | Status |
| 40 | Activate reset | Request |

### Taken in the above order:

### Code 00ₕₑₓ Motor Disconnection error ...

A Motor Disconnection error is generated by the comparator count processing routine upon detection of a disconnected motor winding. Disconnection is determined by comparing the POSITIVE_EXCEEDED_COUNT with a predetermined motor disconnection value.

### Code 01ₕₑₓ Relay Activation Failed error...

A Relay Activation Failed error is generated by the relay status determination routine upon detection of a failure in the activation of the channel relays 35, 39 (figure 2).

### Code 02ₕₑₓ Relay Contact Weld error...

A Relay Contact Weld error is generated by the relay status determination routine upon detection of a failure in the deactivation of the channel relays 35, 39 (figure 2).

### Code 03ₕₑₓ Pre-amplification Stimulation Failed error...

A Pre-amplification Stimulation Failed error is generated by the power-up testing routine upon the failure of a comparator count processing routine to detect a simulated motor run.

### Code 05ₕₑₓ Process Evaluation error...

A Process Evaluation error is generated by the comparator count processing routine upon failure of correct process evaluation.

### Code 10ₕₑₓ Channel OK status...

The Channel OK status code is generated during the power-up testing of channels 1 and 2 as an indication of channel function and is also used from channel 2 to channel 1 as a re-timing or "tick" status to bring both channels sampling times into line.

### Code 11ₕₑₓ Motor at Zero Speed status...

A Motor at Zero Speed status code is generated upon the comparator count processing routine determining that the motor winding on its channel is at zero speed as per section.

### Code 12ₕₑₓ Relay Activated Status...

A Relay Activated status code is generated by the relay status determination routine upon the change of relays (35, 39) status to activated.

### Code 13ₕₑₓ Relay Deactivated status...

A Relay Deactivated status code is generated by the relay status determination routine upon the change of relays (35, 39) status to deactivated.

### Code 14ₕₑₓ Motor Running status...

A Motor Running status code is generated upon the comparator count processing routine determining that the motor winding on its channel is running.

### Code 15ₕₑₓ Channel timed out status...

A Channel timed out status code is generated upont the comparator count processing routine determinging that the other channel has not detected zero motor speed within a period "CCT_CNT" seconds.

### Code 16ₕₑₓ Channel undergoing tests status...

A Channel undergoing tests status code is generated upon entry into the power-up testing routine and indicates to the other channel that channel testing is taking place.

### Code 17ₕₑₓ Channel disabled status...

A Channel disabled status code is generated upon the receipt of an error code from the other channel.

### Code 40ₕₑₓ Activate reset request...

An Activate Reset request code is generated by channel 2 to allow channel 1 to reset.

All errors codes are reported to the opposing channel and cause both channels to be disabled until a power-on reset has been undertaken. A reset my be remotely or locally instructed.

All status codes are reported to the opposing channel but do not affect the operational status of the sending channel other than the Code 15ₕₑₓ (Channel timed out) which prevents zero speed detection from taking place until a motor run condition has been detected once more.

Once microcontroller 1 determines that a motor stop signal has been received on both channel 1 and channel 2, it initiates relay activation routine to activate relay drive 33 and hence relay 35. The relay activation routine which is called every 1mS is enabled to generate a 500Hz (1ms low, 1ms high) signal from microcontroller 131 which will activate external relay 35 via relay drive 33 (Figure 1).

The relay energising circuitry can only activate the relay coil upon application of an alternating current signal. Thus, if the microcontroller fails due to breakdown in the internal architecture caused by an internal or external event which compromises the microcontroller program execution, the 500Hz square wave signal outputted by the microcontroller using pin 16 will cease and the relay will drop out.

The relay is of the force guided contact type and the operational state of one contact of the relay is reflected by the other three contacts within the relay. This allows one of the normally closed contacts to be used as a monitoring contact to determine the relay contacts data and allow the relay operation to be monitored on a constant basis. If the monitoring contact is closed, this normally indicates that the relay is de-energised and this state is sent back to microcontroller pin 10 so that the microcontroller knows the status of the relay. If the contact status is not the same as the activation status, then microcontroller 131 determines that the relay is in error and sends either Code 01ₕₑₓ (Relay Activation Failed error) or (Relay Contact Weld error) under Code 02ₕₑₓ dependent on whether the error has been noted upon detection in the activation of the channel relay or the deactivation of the channel relay.

The relays serve to active a solenoid (not shown) which releases key 309 (figure 1) from key holder 311 (figure 1).

The channel 1 microcontroller 131 also controls the status of three visual LED indicators in order for a local operator or supervisor to determine the status of the motor and the local unit.

The status indicator LED (not shown) is an orange indicator that flashes at a rate of once per second for a flash duration of 25mS during the normal operation of the MSR. If either channel generates an error, then this LED will be constantly illuminated to indicate that the MSR is non-functional. The microcontroller 131 uses output pin 3 to operate this LED.

"Channel 1 zero" speed indication is a green indicator which is illuminated upon the detection of motor zero speed on channel 1. A microcontroller used pin 11 to light this LED. The channel 1 plus 2 zero speed indicator LED is a green indicator which is illuminated upon detection of motor zero speed on both channels 1 and channel 2. This is controlled via pin 6.

Also, pin 6 provides an output to an NPN transistor within an opto-coupler (not shown) which is used by an external Programmable Logic Controller (PLC) as an indication that the motor has stopped. The PLC may then instruct further operations. For example, if the motor is used to operate a food processor, the PLC can instruct the food processor to empty its contents once the motor has stopped.

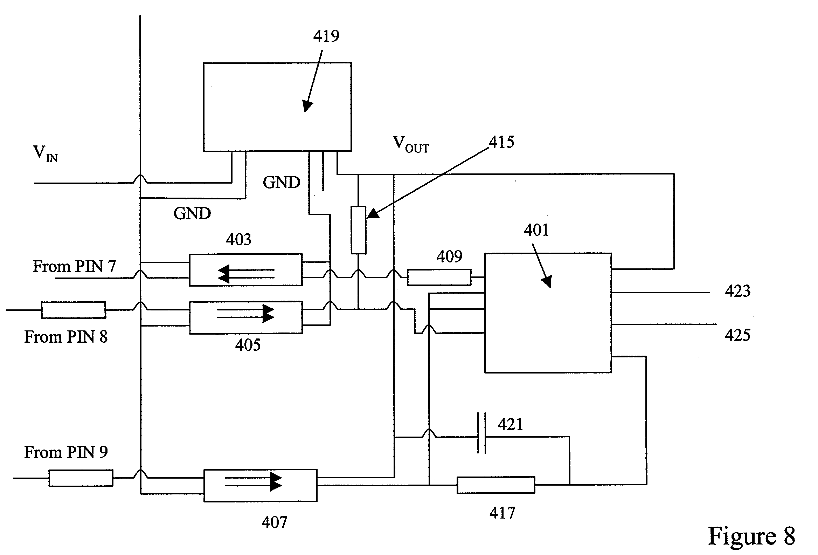

Pins 7, 8 and 9 of channel 1 microcontroller 131 are used to communicate as a serial network interface which will allow communication with serial data and direction control to an RS485 transceiver via opto-isolator. The interface will be described in more detail with reference to figure 8.

In addition to the above pins, pin 2 of microcontroller 131 is used upon application of a power supply to the microcontroller 131. Upon power up, a stimulation signal level generated by microcontroller 131 is applied to amplifier 117 (Figure 4). This is applied to the non-inverting input 115 through a divider network in a steering diode (not shown). This allows the potential of force V DC to applied to amplifier 117 and stimulates a DC motor run condition. This condition is checked for by the comparator count processing routine and if it is not confirmed that this corresponds to a motor run condition, a Code 03ₕₑₓ message is sent from channel 1 microcontroller 131 to channel 2 microcontroller 201 (Figure 7) via pin 15.

The channel 1 microcontroller 131 also waits "channel OK" status from the microcontroller of channel 2 for a period of 10 seconds. If no status is received within this period, then channel 2 is deemed to be in error and Code 05ₕₑₓ error is generated by microcontroller 131 of channel 1.

Also, relay activation and deactivation is instructed by the channel 1 microcontroller 131 via pin 16. The feedback from the relay control is received via pin 10 and this is compared with the intended activation status as explained above. If this is in error, then Code 01ₕₑₓ or Code 02ₕₑₓ are sent to the microcontroller 201 of channel 2 dependent on whether the error is noted when the relay is activated or deactivated.

Pin 14 is used as the power input to microcontroller 131.

Channel 1 microcontroller 131 receives a separate power supply to channel 2 microcontroller 201. The channel 1 microcontroller receives its own isolated operational power supply which is derived from either an external alternating current mains supply of 115V AC/230V AC or an external 24V DC supply. A 115V or 230V AC supply must first be converted to suitable level to supply the microcontroller 131. This is achieved by using a single primary to dual secondary transformer which by its nature also provides necessary isolation between channels and from the channels to the supply. The 115V and 230V options are provided for both selection of a transformer with the appropriate primary winding voltage with both variants having the same dual secondary winding voltage of 12V AC.

If 24V DC supply is used, due to the nature of direct current, it cannot be transformed. However, it must still be isolated from each of the channels. This is achieved by using two DC to DC converters which are used to translate the single 24V DC input supply into two isolated 24V DC supplies.

Once the supply has been derived, it is applied to the channel relay/activation circuitry and sub-regulated into the supply as required by the amplification 117 and microcontroller 131 circuitry. Voltage is then applied via a sequence of voltage regulators and diodes to provide a 5V DC supply which is decoupled to the supply ground (0V) via capacitor and then feed to pin 14 of the microcontroller 131 and the power supply (not shown) of amplifier 117.

The "virtual ground" which is applied to the Z input and amplifier is also derived from this 5V DC power supply.

Figure 7 illustrates the microcontroller 201 which controls channel 2. To avoid unnecessary repetition, channel 2 microcontroller 201 operates in a similar manner to channel 1 microcontroller 131 shown in Figure 4. The evaluation of the signal from the amplification section is applied via pin 18 and is evaluated as described with reference to Figures 4 and 5. Communication with channel 1 takes place using pins 13 and 14 as described with reference to channel 1 microcontroller 131. The test output to the amplifier occurs using pin 2 as described above. Power is input using pin 14 as described above and communication with the relay occurs using pin 16 and feedback is received via pin 10. These functions are identical to those described with relation to channel 1 microcontroller 131.

However, channel 2 microcontroller 201 activates different LEDs to that of channel 1 microcontroller 131.

Channel 2 microcontroller 201 illuminates channel 2 LED which is a green indicator which is illuminated upon detection of zero motor speed on channel 2 alone. This LED is controlled using pin 11.

Further, channel 2 microcontroller 201 controls a further output supply "on" LED via pin 6. This output is also used to control a further PLC controller.

Importantly, the channel 2 microcontroller 201 also liases with serial expansion interface which is a full duplex TTL level asynchronous serial interface which can be utilised for bi-directional communication with off board peripherals such as LCD/keypad panel or other communication interfaces. This may be used in order to provide LCD visual feedback of motor rundown time and keypad/button control of MSR options or as an interface to a supplementary communication interface such as a CAN bus.

Finally, and most importantly, the channel 2 microcontroller 201 communicates with BEMF expansion interface which will be described in more detail with reference to Figures 9.

Figure 8 schematically illustrates the serial network interface and surrounding circuitry which is connected to channel 1 microcontroller 131. Microcontroller 131 (figure 5) communicates with the serial network interface using input and output lines from pins 7, 8 and 9. The lines are used to communicate serial data and direction control to RS485 transceiver 401 via opto-isolators 403, 405 and 407, forward current limiting resistors 409, 411 and 413, and pull up and pull down resistors 415 and 417.

The power supply for transceiver 401 is provided by DC to DC converter 419. Converter 419 receives power V_{IN} from the 5V DC supply for Ch1. The supply generates an isolated 5V DC supply which is decoupled with capacitor 421. The transceiver outputs 423 and 425 are then used to transmit data from microcontroller 131 and receive data for microcontroller 131.

Figure 9 illustrates a BEMF interface 500 with the motor safety relay MSR as an integrated component 400. THE BEMF interface 500 contains the key release mechanism described with reference to figure 1 and allows the MSR to interact with the motor. The MSR 400 has five LEDs which indicate:

| | |
|---|---|
| 501 | status (controlled by channel 1 microcontroller); |
| 503 | channel 1 stop (controlled by channel 1 microcontroller); |
| 505 | channel 2 stop (controlled by channel 2 microcontroller); |
| 507 | channel 1 plus 2 stop (controlled by channel 1 microcontroller); and |
| 509 | supply on controlled by (channel 2 microcontroller). |

The MSR 400 performs the functions described with reference to figures 2 to 8 and has outputs which allow the MSR 400 to be simply mated with the BEMF interface 500.

The BEMF interface has 10 primary terminals (1 to 10) and 13 expansion terminals (E1 to E13)

The function of the terminals is as follows:
Terminals 1 and 2 are connected to solenoid 511. Solenoid when energised releases key 309 (figure 1). The key release mechanism operates by moving a plunger which allows a cam to rotate.

Terminals 3 and 4 are connected to a first solenoid feedback switch 513 and first key switch 515 in series. The solenoid 511 releases the key 309 (figure 1). The first solenoid feedback switch 513 informs the BEMF interface that the solenoid has been energised or not as the case may be. The first key switch 515 feeds back to the BEMF the position of the key.

Terminals 5 and 6 are connected to second solenoid feedback switch 517 and second key switch 519. These perform the same function as the first solenoid feedback switch 513 and the first key switch 515 above. The second switches operate independently of the first switches and are provided as a safety feature to ensure that the unit operates correctly even if one of the switches fails.

Terminals 7 and 8 are connected to a key release button 521. If this button is depressed, then the user is ready to remove the key from the unit.

Terminals 9 and 10 are connected to third key switch 523. Third key switch 523 determines the position of the key (309 - figure 1). It is linked to the MSR relay 400 and allows the relay to determine the position of the key.

Terminals E1 and E2 are power supply terminals and ar used to power both the BEMF 500 and the MSR 400.

Terminal E3 is the earth terminal and provides a ground for both the BEMF 500 and the MSR 400.

Terminals E4, E5 and E6 are respectively taken from the 3 windings of motor 525. Motor 525 is supplied by power supply 527 which may be a three phase, single phase or DC supply. The supply 527 may be provided with speed control or braking functions. E4, E5 and E6 carry inputs Z1, Z2 and Z3 respctively.

Terminals E7, E8 and E9 output to a PLC controller and may be configured to connect to the PLC control output from the MSR as shown in figure 2.

Terminals E10 and E11 are connected in series with first motor start circuit 529 which either starts motor 525 or indicates that it is safe to start motor 525.

Terminals E12 and E13 are connected in series with second motor start circuit 531 which fulfils the same function as first motor start circuit 529. Two motor start circuits are provided to be in accordance with current safety protocols.

## Claims

1. An apparatus for determining the status of a motor, the apparatus comprising:
microprocessor means for determining when the motor has stopped;
indicating means for indicating information about the motor under the control of the microprocessor means; and
a two-way digital data communication interface provided to said microprocessor means to allow data to be obtained from and communicated to said microprocessor means.

2. An apparatus according to claim 1, wherein the apparatus further comprises memory means for storing data concerning the status of the motor.

3. An apparatus according to any preceding claim, further comprising interrogation means which allows information to be obtained concerning the status of the motor.

4. An apparatus according to any preceding claim, wherein the microprocessor means are configured such that information received from a local or remote device via said communication interface affects the indicator means.

5. An apparatus according to any preceding claim, wherein the communication interface is interfaced to a safety bus.

6. An apparatus according to claim 5, wherein the safety bus operates in accordance with CAT 4 guidelines.

7. An apparatus according to any preceding claim, wherein the communication means are configured to communicate with a keypad or keyboard.

8. An apparatus according to any preceding claim, wherein the communication means are connected to a bluetooth communicator.

9. An apparatus according to claim 8, wherein the bluetooth communicator is configured to communicate with a mobile receiver.

10. An apparatus according to any preceding claim, further comprising means to measure the back EMF of the motor and to provide a signal indicative of the back EMF to the microprocessor means.

11. An apparatus according to claim 10, further comprising:
first input means for receiving a first signal indicative of the back EMF from a first winding of the motor; and
second input means for receiving a second signal indicative of the back EMF from a second winding of the motor,
the microprocessing means comprising:
first logic means for determining when said first signal satisfies a first logic condition; and
second logic means for determining when said second signal satisfies a second logic condition; the
microprocessor means determining that the motor has stopped when the first and second conditions are satisfied within a predetermined time interval.

12. An apparatus according to claim 11, wherein the first logic means comprises a first comparator for comparing the first signal with a threshold.

13. An apparatus according to claim 12, wherein the first comparator compares the first signal with an upper and lower threshold.

14. An apparatus according to any of claims 11 to 13, wherein the second logic means comprises a second comparator for comparing the second signal with a threshold.

15. An apparatus according to claim 14, wherein the second comparator compares the second signal with an upper and lower threshold.

16. An apparatus according to any preceding claim, further comprising a key and key releasing means, said indicator means comprising means to release said key when the motor has stopped.

17. An apparatus according to claim 11, further comprising means to sense the back EMF of the first and second motor windings.

18. An apparatus according to claim 17, wherein the first and second motor windings are measured with respect to a third input from a third motor winding.

19. An apparatus according to claim 17, wherein a predetermined voltage is applied to the third input, such that the third input forms a virtual ground.

20. An apparatus according to claim 11, wherein the first and second input means are isolated from one another.

21. A method of determining the status of a motor, comprising:
providing microprocessor means for determining when the motor has stopped;
providing indicating means for indicating information about the motor under the control of the microprocessor means; and
providing a two-way digital data communication interface provided to said microprocessor means to allow data to be obtained from and communicated to said microprocessor means.
